# EUROPÄISCHE PATENTSCHRIFT

(11) **EP 3 221 742 B1**
(45) Veröffentlichungstag und Bekanntmachung des Hinweises auf die Patenterteilung: **10.08.2022**
(21) Anmeldenummer: 16703956.9
(22) Anmeldetag: 06.02.2016
(51) Int. Cl.: G01N 21/64, G02B 21/00, G02B 21/16, G02B 27/14

(54) **STRAHLTEILER UND ANORDNUNG ZUR UNTERSUCHUNG EINER MITTELS ELEKTROMAGNETISCHER STRAHLUNG ANREGBAREN PROBE**
BEAM SPLITTER AND ARRANGEMENT FOR EXAMINING A SAMPLE WHICH CAN BE EXCITED BY MEANS OF ELECTROMAGNETIC RADIATION
SÉPARATEUR DE FAISCEAU ET DISPOSITIF D'EXAMEN D'UN ÉCHANTILLON EXCITABLE AU MOYEN D'UN RAYONNEMENT ÉLECTROMAGNÉTIQUE

(30) Priorität: 10.02.2015 DE 102015101847
(43) Veröffentlichungstag der Anmeldung: 27.09.2017
(73) Patentinhaber: EyeSense GmbH, 63762 Großostheim (DE)
(72) Erfinder: MÜLLER, Ralf, 09648 Mittweida (DE); ORTLEPP, Hans-Georg, 99192 Apfelstädt (DE)
(74) Vertreter: Engel, Christoph Klaus
(86) Internationale Anmeldenummer: PCT/EP2016/052581
(87) Internationale Veröffentlichungsnummer: WO 2016/128334

(56) Entgegenhaltungen:
- CN-A- 101 191 902
- CN-U- 203 930 052
- JP-A- 2008 102 352
- US-A- 3 922 069
- US-A- 4 444 464
- US-A- 5 828 497
- US-A1- 2013 308 198
- US-B1- 6 238 051

## Beschreibung

Die vorliegende Erfindung betrifft eine Anordnung zur Untersuchung einer mittels elektromagnetischer Strahlung anregbaren Probe, wobei die Anordnung einen dichroitischen Strahlteiler umfasst. Dichroitische Strahlteiler teilen einfallendes Licht in bestimmte Wellenlängenbereiche auf. Bei der hier betrachteten elektromagnetischen Strahlung handelt es sich um Licht im Bereich zwischen ultravioletter bis infraroter Strahlung.

Ein Strahlteiler ist ein optisches Bauelement, welches einen einzelnen Strahl in zwei Teilstrahlen trennt. Fällt ein Strahl auf einen Strahlteiler, so wird ein Teil des einfallenden Strahls reflektiert und der andere Teil transmittiert. Bei einem dichroitischen Strahlteiler kommt es in Abhängigkeit von der Wellenlänge des einfallenden Strahls zu unterschiedlichen Transmissionswerten bzw. Reflexionswerten. Streuverluste sind bei dichroitischen Strahlteilern sehr gering, so dass Transmissionsgrad plus Reflexionsgrad nahezu eins sind.

Dichroitische Strahlteiler werden beispielsweise bei Fluoreszenzmessgeräten verwendet, wo sie zumeist als dichroitische Strahlteilerplatte ausgebildet sind. Dichroitische Strahlteilerplatten weisen auf ihrer Oberfläche eine dichroitische Beschichtung auf. Die Flächennormale dieser Platten steht i. A. um 45° versetzt zum Strahlengang. Die Transmissionskennlinie über der Wellenlänge (Transmission ist eine Funktion der Wellenlänge) beinhaltet bei dichroitischen Strahlteilerplatten eine relativ steile Übergangsflanke von keinen zu hohen Transmissionswerten bzw. vice versa.

Hierdurch können dichroitische Strahlteilerplatten gut bei der Anregung von Fluoreszenzleuchtstoffen eingesetzt werden, welche häufig einen relativ geringen Abstand zwischen Anregungswellenlänge und Emissionswellenlänge aufweisen.

Die EP 1 856 509 B1 beschreibt ein Fluoreszenzmessgerät zur Untersuchung einer Probe, welches einen Hauptstrahlengang und mindestens ein optisches Modul aufweist. Das optische Modul dient zur Bereitstellung mindestens eines zur Anregung der Probe vorgesehenen elektromagnetischen Strahles und zum Empfang mindestens eines von der Probe emittierten elektromagnetischen Strahls. Das Fluoreszenzmessgerät umfasst mindestens eine Quelle zur Bereitstellung elektromagnetischer Strahlen, welche mittels einer Monitordiode überwacht wird. Im Hauptstrahlengang sind vorzugsweise mehrere, als dichroitische Spiegel ausgebildete Strahlteiler (dichroitische Strahlteilerplatten) angeordnet. Die dichroitischen Spiegel oder dichroitischen Strahlteilerplatten können als Hochpässe angesehen werden, welche langwelligere elektromagnetische Strahlen transmittieren und kurzwelligere Strahlen reflektieren. Sie sind optimiert auf einen Auftreffwinkel des elektromagnetischen Strahls von 45°. Mittels dichroitischer Spiegel werden beispielsweise anregende elektromagnetische Strahlen der Quelle in den Hauptstrahlengang eingekoppelt und auf die Probe fokussiert.

Aus dem Stand der Technik sind weiterhin Strahlteilerwürfel bekannt, welche aus zwei miteinander verbundenen Prismen bestehen, zwischen denen eine dielektrische Schicht angeordnet ist. In der EP 2 711 762 A1 ist ein nicht-polarisierender Strahlteilerwürfel beschrieben, welcher eine Schichtenfolge von Brechungsschichten aus dielektrischem Material mit unterschiedlichen Brechungsindizes aufweist.

Nicht-polarisierendende Strahlteilerplatten und auch nicht polarisierendende Strahlteilerwürfel teilen das einfallende Licht in einen bestimmten Transmissions/Reflexions-Verhältnis, wobei der ursprüngliche Polarisationszustand erhalten bleibt. Eine dichroitische Funktion ist hier nicht vorhanden. Alle Wellenlängen werden in einem bestimmten Verhältnis z.B. 50 % zu 50 % aufgeteilt.

Die US 5,400,179 A befasst sich mit einem Strahlteiler aus zwei Prismen zwischen denen eine optische Schicht aus sechs Teilschichten angeordnet ist. Benachbarte Teilschichten weisen einen unterschiedlichen Brechungsindex auf. Der Einfallswinkel eines auf die optische Schicht auftreffenden Strahls beträgt mindestens 40°. In dieser Druckschrift werden keine dichroitischen Strahlteiler betrachtet. Es werden vielmehr nicht-polarisierendende Strahlteiler betrachtet. Derartige Strahlteiler können z. B. für Fluoreszenzmessungen nicht eingesetzt werden, da sie keine Transmissionskennlinie über der Wellenlänge (Transmission ist eine Funktion der Wellenlänge) aufweisen, die eine Übergangsflanke von keinen zu hohen Transmissionswerten bzw. vice versa hat.

Die JP 2009-31406 A zeigt einen nicht-polarisierten Strahlteiler, bestehend aus zwei Prismen und einer zwischen den beiden Prismen angeordneten dielektrischen Schicht aus mehreren miteinander verbundenen Teilschichten. Die Teilschichten besitzen unterschiedliche Brechungsindizes. Während zumindest eine Teilschicht einen höheren Brechungsindex als die Prismen aufweist, besitzt zumindest eine andere Teilschicht einen niedrigeren Brechungsindex als die Prismen. Der Strahlteiler kann aus zwei Prismen mit dreieckiger oder trapezförmiger Grundfläche bestehen. Bei den Ausführungen mit trapezförmiger Grundfläche ist der Einfallswinkel eines auf die dielektrische Schicht auftreffenden Strahls wesentlich größer als 45°. Im beschriebenen Ausführungsbeispiel beträgt der Einfallswinkel 72°.

Aus der WO 2010/025536 A1 ist ein Strahlteiler bestehend aus zwei trapezförmigen Prismen bekannt. Zwischen den Prismen befindet sich eine Beschichtungsstruktur mit einer oberen Schicht, einer Abstandsschicht und ggf. einer unteren Schicht. Die Abstandsschicht umschließt einen mit nicht reaktivem Gas oder mit Vakuum gefüllten Hohlraum, welcher als Interferenzschicht fungiert. Die Beschichtungsstruktur ermöglicht Dünnschichtinterferenz in Verbindung mit frustrierter Totalreflexion innerhalb des Hohlraums für vorgegebene Einfallswinkel.

Die US 2013/0308198 A1 zeigt einen dichroitischen Strahlteiler, bestehend aus mindestens zwei miteinander verbundenen Prismen. Der Strahlteiler weist drei äußere Oberflächen auf, die in unterschiedlichen Ebenen angeordnet sind. Im Strahlteiler innenliegend ist eine dichroitische Schicht angeordnet, die mindestens eine der Oberflächen kreuzt.

Aus dem Stand der Technik sind auch dichroitische Strahlteilerwürfel bekannt. Auch dichroitische Strahlteilerwürfel teilen einfallendes Licht in bestimmte Wellenlängenbereiche auf. Auch bei dichroitischen Strahlteilerwürfeln kommt es in Abhängigkeit von der Wellenlänge des einfallenden Strahls zu unterschiedlichen Transmissionswerten bzw. Reflexionswerten. Auch Streuverluste sind bei dichroitischen Strahlteilerwürfeln sehr gering, so dass Transmissionsgrad plus Reflexionsgrad nahezu eins sind. Die Transmissionskennlinie über der Wellenlänge (Transmission ist eine Funktion der Wellenlänge) beinhaltet bei dichroitischen Strahlteilerwürfeln eine verhältnismäßig flache Übergangsflanke von keinen zu hohen Transmissionswerten bzw. vice versa. Hierdurch eignen sie sich nicht für Messungen, bei denen der Abstand zwischen Anregungswellenlänge und Emissionswellenlänge relativ gering ist. Dies ist beispielsweise bei der Messung von Fluoreszenzlicht der Fall, da bei vielen Fluoreszenzfarbstoffen nur ein geringer Abstand zwischen Anregungswellenlänge und Emissionswellenlänge besteht. Typische Abstandswerte zwischen Anregungswellenlänge und Emissionswellenlänge liegen im Bereich von 20 bis 30 nm, wobei auch geringere Abstandswerte möglich sind. Eine zu geringe Steilheit der Transmissionskennlinie hat zur Folge, dass sich der Übergangsbereich von hoher Reflexion zu hoher Transmission deutlich über einen größeren Wellenlängenbereich als die genannten 20 bis 30 nm erstreckt. Das Anregungslicht würde somit das Messergebnis verfälschen. Ein Vorteil von Strahlteilerwürfeln ist, dass weitere optische Bauelemente direkt an den Seitenflächen des Strahlteilerwürfels angeordnet werden können. Hierdurch verringert sich der Montageaufwand, da die optischen Bauelemente bereits entsprechend am Strahlteilerwürfel positioniert werden können.

In der US 2014/0206580 A1 ist beispielsweise eine Anordnung zur Darstellung von Micro-Array-Daten beschrieben. Die Anordnung umfasst u.a. einen dichroitischen Spiegel oder einen Strahlteiler. Der Strahlteiler besteht aus zwei symmetrischen, fünfeckigen Strahlteilekomponenten. Der Strahlteiler kann mit einem Zentralachsenoffset zur Longitudinalachse einer Haltestange, an welcher der Strahlteiler befestigt ist, angeordnet werden. Der zwischen der Zentralachse des Strahlteilers und der Longitudinalachse der Haltestange aufgespannten Winkel soll 30° bis 45° betragen. Der Winkel zwischen der Eintrittsfläche für eine Laserstrahlung und der Kontaktfläche der beiden Strahlteilerkomponenten beträgt unveränderlich 45°.

Die US 5,828,497 A beschreibt einen dichroitischen Strahlteiler für ein System zum Separieren und Kombinieren von Frequenzbändern. Der Strahlteiler besitzt ein Pentaprisma und zwei Glasfestkörper, welche miteinander verbunden sind. Zwischen den Körpern sind dichroitische Schichten angebracht. Zwischen der Eintrittsfläche des Pentaprismas und der dichroitischen Schicht ist ein Winkel β von 22,5° eingeschlossen.

Die US 3,922,069 zeigt ein Prismasystem zur Farbseparierung für eine Farbfernseherkamera. Das System umfasst drei Prismenblöcke sowie dazwischen befindliche dichroitische Schichten. Es kommt zur Transmission und Reflexion an der dichroitischen Schicht.

Aus der CN 101191902 A ist ein dreifarbiges hexagonales Farbkombinationsprisma bekannt, welches aus vier Glasprismen besteht. Zwischen den Flächen, an denen die Prismen aneinander anliegen, ist jeweils eine Lichtmembran bzw. ein Lichtfilter angeordnet, welche einen ersten farbigen Lichtbestandteil reflektieren und die anderen beiden Lichtbestandteile transmittieren.

In der US 6,238,051 B1 ist ein Farbseparierungsprisma, welches aus drei Prismen zusammengesetzt ist, gezeigt. Zwischen den einzelnen Prismen sind dichroitische Schichten angeordnet.

Die US 2013/0308198 A1 zeigt einen dichroitischen Strahlteiler, bestehend aus mindestens zwei miteinander verbundenen Prismen. Der Strahlteiler weist drei äußere Oberflächen auf, wobei die Oberflächen auf unterschiedlichen Ebenen des Strahlteilers angeordnet sind. Im Strahlteiler innenliegend ist eine dichroitische Schicht angeordnet, die mindestens eine Oberfläche kreuzt.

Ein Nachteil der, insbesondere zur Fluoreszenzmessung verwendeten, vorbekannten Messanordnungen ist, dass sie die Grenze der Miniaturisierbarkeit längst erreicht haben und einen hohen Justageaufwand erfordern. Dichroitische Strahlteilerplatten haben vor allem den Nachteil, dass angrenzende optische Bauelemente frei im Raum und sehr präzise zu diesen Strahlteilerplatten justiert werden müssen. In der näheren Umgebung von Strahlteilern werden jedoch häufig andere optische Elemente, wie beispielsweise lichtabsorbierende Anordnungen benötigt. Eine Möglichkeit für lichtabsorbierende Anordnungen besteht in der Verschachtelung von Grenzflächen zwischen Luft und dunklen festen Strukturen. Derart ausgebildete lichtabsorbierende Anordnungen können nicht direkt mit Strahlteilerplatten verbunden werden und sind nur ungenügend miniaturisierbar.

Die Aufgabe der vorliegenden Erfindung besteht darin, eine Anordnung zur Messung einer von einer Probe emittierten Strahlung bei gleichzeitiger Anregung der Probe mit elektromagnetischer Strahlung zur Verfügung zu stellen, welche gut miniaturisierbar ist und aufwandsarm zu montieren und justieren ist..

Zur Lösung der Aufgabe dient eine Anordnung zur Untersuchung einer mittels elektromagnetischer Strahlung anregbaren Probe gemäß dem beigefügten Anspruch 1.

Ein vorzugsweise in der erfindungsgemäßen Anordnung verwendeter dichroitische Strahlteiler umfasst ein erstes und ein zweites Prisma, welche an ihren Basisflächen miteinander verbunden sind, und eine zwischen den Basisflächen der beiden Prismen angeordnete dichroitische Schicht bzw. dichroitische Beschichtung, wobei eine Eintrittsfläche des ersten Prismas vorzugsweise senkrecht zu einer einfallenden Strahlung ist. Das heißt die Flächennormale der Eintrittsfläche verläuft vorzugsweise parallel zur einfallenden Strahlung. Viele Strahlquellen haben auch nach einer Strahlformung eine Winkel-Abstrahlcharakteristik. Die Strahlquelle wird demzufolge vorzugweise so ausgerichtet, dass die Richtung der größten Strahlstärke parallel mit der Flächennormale der Eintrittsfläche verläuft. Die Eintrittsfläche des ersten Prismas schließt mit der dichroitischen Schicht einen Winkel im Bereich von 10° bis <40° ein, wobei sich ein Winkel im Bereich von 25° bis 35° als besonders günstig erwiesen hat. Hieraus ergibt sich für eine auf die dichroitische Schicht auftreffende Strahlung ein Einfallswinkel im Bereich von 10° bis <40° zur Flächennormale der dichroitischen Schicht.

Ein wesentlicher Vorteil der erfindungsgemäßen Lösung ist darin zu sehen, dass durch die spezielle geometrische Ausbildung der Prismen ein Strahlteiler zur Verfügung steht, dessen Transmissionskennlinie über der Wellenlänge (Transmission ist eine Funktion der Wellenlänge) im Übergangsbereich zwischen kleiner und hoher Transmission einen ähnlich steilen Verlauf wie die Transmissionskennlinie über der Wellenlänge (Transmission ist eine Funktion der Wellenlänge) im Übergangsbereich zwischen kleiner und hoher Transmission der vorbekannten dichroitischen Strahlteiler-Platten aufweist. Dies wird durch den erfindungsgemäß realisierten Einfallswinkel an der dichroitischen Schicht erreicht.

Im Gegensatz zur erfindungsgemäßen Gestaltung wird bei bekannten nicht-polarisierenden dichroitischen Strahlteilerplatten das Licht von Luft in die dichroitische Schicht hineingebrochen. Bei Strahlteilerplatten beträgt der Einfallswinkel i. A. 45° zur Flächennormale der dichroitischen Schicht. Hat die erste Teilschicht der dichroitischen Schicht z. B. eine Brechzahl von 1,7, dann beträgt der Winkel der Strahlung zur Flächennormale der dichroitischen Schicht innerhalb der ersten Teilschicht ca. 24,6° (durch die Brechung). Dieser relativ kleine Winkel pflanzt sich in weiteren Teilschichten der dichroitischen Schicht immer weiter fort und ist der Grund dafür, dass der Übergangsbereich von hoher Transmission (z. B. 95 %) zu kleiner Transmission (z. B. 0,2 %) innerhalb von 20 bis 30 nm erfolgen kann.

Bei herkömmlichen nicht-polarisierenden dichroitischen Strahlteilerwürfeln wird das Licht von einem dielektrischen Material (z. B. Glas; Brechzahl ca. 1,5) in die erste Teilschicht der dichroitischen Schicht hineingebrochen. Für einen Würfel beträgt der Einfallswinkel 45° zur Flächennormale der dichroitischen Schicht. Hat die erste Teilschicht der dichroitischen Schicht wiederum z. B. eine Brechzahl von 1,7, dann beträgt der Winkel der Strahlung zur Flächennormale der dichroitischen Schicht innerhalb der ersten Teilschicht ca. 38,6° (durch die Brechung). Dieser relativ große Winkel pflanzt sich in weiteren Teilschichten der dichroitischen Schicht immer weiter fort und ist der Grund dafür, dass der Übergangsbereich von hoher Transmission (z. B. 90 %) zu kleiner Transmission (z. B. 10 %) nur innerhalb von 300 bis 400 nm erfolgen kann. Dies kann wiederum darauf zurückgeführt werden, dass es bei diesem relativ großen Winkel verstärkt zu Totalreflexionen zwischen den einzelnen Teilschichten der dichroitischen Schicht kommt.

Im Vergleich zur dichroitischen Platte hat der erfindungsgemäße Strahlteiler weiterhin den Vorteil, dass zusätzliche optische Elemente direkt, beispielsweise über eine Klebeverbindung, an den Außenflächen des Strahlteilers befestigt werden können. Dies ist sehr zweckmäßig, da die optischen Elemente somit bereits in ihrem Abstand und ihrem Winkel zur dichroitischen Schicht justiert sind. Somit wird ein vorbestimmter Abstand der optischen Elemente exakt eingehalten. Auf diese Weise wird der Justieraufwand in den Herstellungsprozess der Prismen verlagert, bei dem ohnehin hochpräzise Fertigungsverfahren zum Einsatz kommen. Erfindungsgemäß wird eine selbsttragende Struktur geschaffen, die kein zusätzliches Gehäuse erfordert.

Bei einer vorteilhaften Ausführungsform schließt eine Austrittsfläche des ersten Prismas mit der dichroitischen Schicht einen Winkel im Bereich von 10 bis <40° ein, wobei die Austrittsfläche des ersten Prismas senkrecht zu einer austretenden Strahlung ist.

Nach einer bevorzugten Ausführungsform besteht die dichroitische Schicht oder dichroitische Beschichtung aus dielektrischem Material. Die dichroitische Schicht kann aus mehreren Teilschichten aus dielektrischem Material mit unterschiedlichen Brechungsindizes bestehen. Gängige Materialien sind beispielsweise TiO₂, AlF₃, Al₂O₃. Bei Verwendung von niedrigbrechenden Materialien kann der Brechungsindex beispielsweise im Bereich von 1,3 bis 1,5 liegen. Bei mittelbrechenden Materialien beträgt der Brechungsindex beispielsweise >1,5 bis 1,8. Hochbrechende Materialen können zum Beispiel einen Brechungsindex >1,8 bis 2,4 aufweisen.

Der Strahlteiler besitzt eine Grundfläche in Form eines regelmäßigen Sechsecks. Damit stehen zum Anbringen zusätzlicher optischer Elemente verhältnismäßig viele Flächen zur Verfügung.

Der Strahlteiler besteht vorzugsweise aus zwei gleichartig ausgebildeten Prismen, wobei auch Ausführungsformen mit ungleichartig ausgebildeten Prismen möglich sind. Die mögliche Formgebung der Prismen wird lediglich dadurch beschränkt, dass der erfindungsgemäß geforderte Winkel zwischen der Eintrittsfläche eines der beiden Prismen und der dichroitischen Schicht im Bereich von 10° bis <40° aufgespannt ist. Die beiden Prismen weisen vorzugsweise den gleichen Brechungsindex auf.

Die erfindungsgemäße Anordnung zur Untersuchung einer mittels elektromagnetischer Strahlung anregbaren Probe umfasst zunächst eine Lichtquelle zum Bereitstellen einer zur Anregung der Probe dienenden elektromagnetischen Strahlung. Die Lichtquelle kann beispielsweise eine LED oder ein Laser sein und in abgewandelten Ausführungsformen auch Vorrichtungen zur Strahlformung wie z.B. Linsen und Blenden umfassen. Ein weiterer Bestandteil der Anordnung ist der bereits beschriebene dichroitische Strahlteiler, welcher ein erstes und ein zweites Prisma umfasst, welche an ihren Basisflächen miteinander verbunden sind, sowie eine zwischen den Basisflächen der beiden Prismen angeordnete dichroitische Schicht beinhaltet. Der dichroitische Strahlteiler dient zum Umlenken zumindest eines Teils der von der Lichtquelle bereitgestellten elektromagnetischen Strahlung in Richtung Probe und zum Durchleiten einer von der Probe nach deren Anregung emittierten elektromagnetischen Strahlung. Zur Anordnung gehört außerdem ein Detektor zum Erfassen der von der Probe emittierten elektromagnetischen Strahlung. Der Detektor kann als Fotodiode ausgebildet sein.

Nach einer bevorzugten Ausführungsform umfasst die Anordnung eines oder mehrere weitere optische Bauelemente, welche an den Außenflächen des Strahlteilers befestigt sind. Die optischen Bauelemente sind vorzugsweise mittels eines geeigneten Klebstoffs auf den Außenflächen des Strahlteilers fixiert. Zu den in Frage kommenden optischen Bauelementen gehören zum Beispiel Filter, Linsen, Strahlumlenkungen, Detektorelemente wie z.B. Fotodioden oder Absorber.

Filter dienen beispielsweise zum Herausfiltern bestimmter Frequenzbereiche der von der Lichtquelle emittierten Strahlung. Somit kann die Probe mit einer geeigneten Frequenz angeregt werden. Hierzu ist der Filter derart am Strahlteiler zu befestigen, dass die von der Lichtquelle emittierte Strahlung vor ihrem Eintritt in den Strahlteiler den Filter passiert.

Eine Linse kann zum Beispiel am Strahlteiler solcherart positioniert werden, dass die von der dichroitischen Schicht des Strahlteilers reflektierte Strahlung bzw. die von der Probe emittierte Strahlung die Linse auf ihrem Weg zur bzw. von der Probe passiert und diese entsprechend ausrichtet. In einem speziellen Ausführungsbeispiel dient eine Linse dazu, elektromagnetische Strahlung in eine lichtleitende Faser ein- oder auch wieder auszukoppeln.

Die lichtleitende Faser ist in einer vorteilhaften Ausführungsform fest mit der Probe verbunden. In einer alternativen Ausführungsform ist die lichtleitende Faser nicht fest mit der Probe verbunden, so kann die lichtleitende Faser beispielsweise in eine größere Probe hineinragen.

In einer weiteren Ausführungsform wird als optisches Bauelement eine Strahlumlenkungseinheit verwendet. Die Strahlumlenkungseinheit wird bevorzugt an der Außenseite der Austrittsfläche des ersten Prismas befestigt und ist besonders bevorzugt aus Kunststoff oder Glas gefertigt, beispielsweise als Kunststoffspritzgussteil oder Glasprägeteil. Bevorzugt weist die Strahlumlenkungseinheit eine abgewinkelte röhrenförmige Gestalt auf. Die Strahlumlenkungseinheit dient der Umlenkung der elektromagnetischen Strahlung (Licht). Bevorzugt erfolgt die Strahlumlenkung in einem 90° Winkel, wobei die Umlenkfläche bevorzugt gegenüber der Austrittsfläche des ersten Prismas liegt. Um eine 90°-Umlenkung zu realisieren spannen eine optische Fläche und die Austrittsfläche des ersten Prismas einen Winkel von 45° auf. Zur Umlenkung weist die Strahlumlenkungseinheit bevorzugt mindestens eine optische Fläche auf, an welcher der Strahlengang einer Totalreflexion unterliegt.

In einer abgewandelten Ausführungsform ist möglich, dass einer erste optische Fläche sowohl die Umlenkung realisiert als auch einen Teil der Fasereinkopplung übernimmt. Hierfür kann die erste optische Fläche eine torische Fläche sein. Zusätzlich kann die erste optische Fläche in einem ihrer Querschnitte asphärisch sein. Eine zweite optische Fläche ist dann im Allgemeinen rotationssymmetrisch und kann sowohl sphärisch als auch asphärisch sein.

Die erste optische Fläche kann an einem Glaskörper oder einer metallisierte Fläche gebildet sein und als Umlenkspiegel oder Toroidspiegel realisiert werden.

In einer weiteren Ausführungsform wird die umgelenkte Strahlung in die lichtleitende Faser ein- oder ausgekoppelt. Durch die Strahlenumlenkungseinheit wird die lichtleitende Faser senkrecht zum Strahlteiler angeordnet, wodurch ein vorteilhafter Anordnungsaufbau realisiert wird.

Vorteilhaft hat sich die Anordnung eines Absorbers an einer Fläche des Strahlteilers erwiesen, welche gegenüberliegend zu der Eintrittsfläche des Strahlteilers angeordnet ist, durch die die von der Lichtquelle ausgesandte Strahlung in den Strahlteiler eintritt. Mittels Absorber kann der vom Strahlteiler transmittierte Anteil der von der Lichtquelle ausgesandten Strahlung absorbiert werden, damit dieser Anteil durch z.B. Lichtstreueffekte nicht unkontrolliert zum Detektor gelangt. Nur von der Probe emittierte (nicht reflektierte) elektromagnetische Strahlung darf zum Detektor gelangen.

Gemäß einer nochmals abgewandelten Ausführungsform kann als weiteres optisches Bauelement auch ein weiterer Strahlteiler verwendet werden, vorzugsweise ein zweiter dichroitischer Strahlteiler in der oben beschriebenen Bauart. Die Funktionalität der dichroitischen Schicht (Position der Flanke) kann bei dem zweiten Strahlteiler natürlich anders als beim ersten ausgebildet sein. Damit werden zwei dieser neuartigen Strahlteilerwürfel zusammengefügt. Im zweiten Strahlteilerwürfel wird dann beispielsweise die von der Probe emittierte Fluoreszenzstrahlung in zwei Wellenlängen aufgespalten.

Die erfindungsgemäße Anordnung dient vorzugsweise zur Messung von bei Anregung fluoreszierender Proben auftretender Strahlung. Es soll jedoch keine Einschränkung auf Fluoreszenzmessungen erfolgen.

Weitere Vorteile und Einzelheiten der Erfindung ergeben sich aus der nachfolgenden Beschreibung bevorzugter Ausführungsformen, unter Bezugnahme auf die beigefügte Zeichnung. Es zeigen:
- Fig. 1: eine erfindungsgemäße Anordnung zur Untersuchung einer mittels elektromagnetischer Strahlung anregbaren Probe;
- Fig. 2: eine abgewandelte Ausführungsform der Anordnung, die sich zur Messung von Glucosekonzentrationen eignet;
- Fig. 3: Details einer abgewandelten Ausführungsform der Anordnung zur Untersuchung einer mittels elektromagnetischer Strahlung anregbaren Probe.

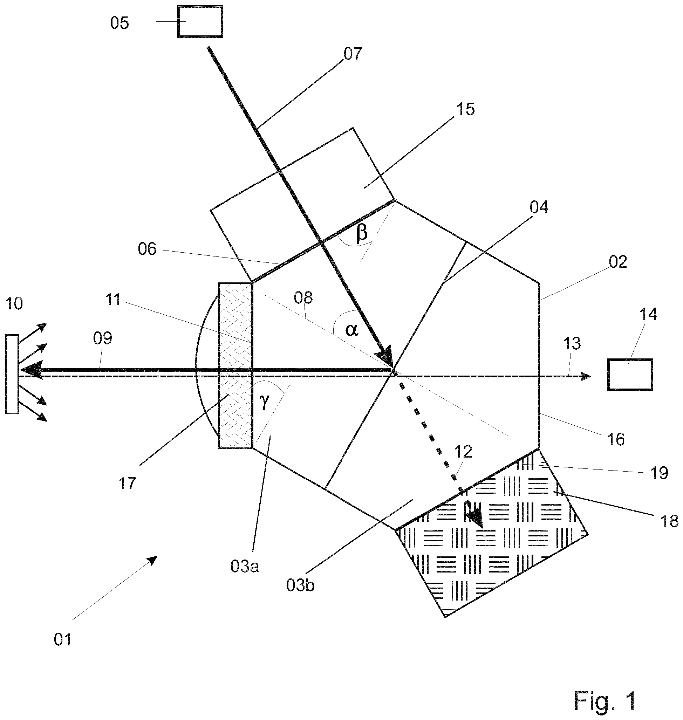

Eine in Fig. 1 gezeigte erfindungsgemäße Anordnung 01 beinhaltet einen dichroitischen Strahlteiler 02, welcher aus zwei miteinander verbundenen Prismen 03 besteht. In der gezeigten Ausführung sind ein erstes Prisma 03a und ein zweites Prisma 03b gleichartig ausgeführt. Es sind jedoch auch Ausführungen möglich, bei denen unterschiedlich ausgestaltete Prismen 03 zum Einsatz kommen. Zwischen den Prismen 03 befindet sich eine dichroitische Schicht 04. Die dichroitische Schicht 04 ist vorzugsweise als Beschichtung auf einer der einander gegenüberliegenden und miteinander verbundenen Basisflächen der Prismen 03 ausgebildet. Ebenso können auch beide Prismen 03 an ihrer Basisfläche eine Beschichtung aufweisen. Die dichroitische Schicht 04 kann aus mehreren Teilschichten aus dielektrischem Material mit unterschiedlichen Brechungsindizes bestehen. Die Prismen 03 besitzen in der dargestellten Ausführung eine fünfeckige Grundfläche. Hieraus ergibt sich für den aus den beiden Prismen 03 zusammengesetzten Strahlteiler 02 eine Grundfläche in Form eines regelmäßigen Sechsecks. Es soll jedoch keine Einschränkung auf sechseckige Strahlteiler 02 erfolgen. Durch die Ausführung der Prismen 03 und der damit verbundenen Anordnung der dichroitischen Schicht 04 ist lediglich sicherzustellen, dass ein auf die dichroitische Schicht 04 auftreffender Strahl einen Einfallswinkel im Bereich von 10° bis <40° zur Flächennormale zum Lot 08 der dichroitischen Schicht 04 aufweist.

Zur Anordnung gehört weiterhin eine Lichtquelle 05 zu der auch Vorrichtungen zur Strahlformung gehören können, welche eine elektromagnetische Strahlung 07 aussendet, vorzugsweise in kollimierter Form. Lichtquelle 05 und Strahlteiler 02 sind so angeordnet, dass die von der Lichtquelle 05 ausgesandte Strahlung 07 zentral und senkrecht auf eine Eintrittsfläche 06 des ersten Prismas 03a einfällt. Es soll jedoch keine Einschränkung für den senkrechten und/oder zentralen Lichteinfall erfolgen. Eintrittsfläche 06 und dichroitische Schicht 04 schließen in der gezeigten Ausführungsform einen Winkel β von etwa 30° ein. Hieraus ergibt sich für den zur Flächennormale 08 der dichroitischen Schicht gemessenen Einfallswinkel α der auf die dichroitische Schicht 04 auftreffenden Strahlung 07 ebenfalls etwa 30°. Von der auf die dichroitische Schicht 04 auftreffenden Strahlung 07 wird eine Teilstrahlung 09 in Richtung einer Probe 10 reflektiert und eine Teilstrahlung 12 transmittiert. Die dichroitische Schicht 04 ist so ausgeführt, dass die Anteile der Strahlung 07, welche zur Anregung der Probe 10 geeignet sind, an der dichroitischen Schicht 04 reflektiert werden und an einer Austrittsfläche 11 des ersten Prismas 03a aus dem Strahlteiler 02 austreten. Der von Austrittsfläche 11 des ersten Prismas 03a und dichroitische Schicht 04 eingeschlossene Winkel γ beträgt in der gezeigten Ausführungsform ebenfalls 30°. Zwischen der Eintrittsfläche 06 und der Austrittsfläche 11 ist somit ein Winkel von 120° aufgespannt.

Nach Auftreffen der Teilstrahlung 09 wird von der Probe 10 eine Strahlung 13 emittiert, welche über die Austrittfläche 11 des ersten Prismas 03a zurück in den Strahlteiler 02 geworfen wird, durch die dichroitische Schicht 04 transmittiert und den Strahlteiler 02 dann auf der gegenüberliegenden Seite verlässt, nämlich an einer Messfläche 16 des zweiten Prismas 03b. Die Messfläche 16 des zweiten Prismas 03b und die Austrittsfläche 11 des ersten Prismas 03a liegen sich parallel gegenüber, befinden sich aber auf unterschiedlichen Seiten in Bezug zur dichroitischen Schicht 04. Diese emittierte Strahlung 13 wird mit Hilfe eines entsprechend angeordneten Detektors 14 erfasst. Der Detektor 14 kann beabstandet von der Messfläche 16 angeordnet sein oder auch direkt an dieser angebracht werden. Eine weitere Ablenkung der Strahlung über Spiegel ist auch möglich.

An den Außenflächen des Strahlteilers 02 sind weitere optische Bauelemente angeordnet, welche vorzugsweise mittels Klebstoff an den Außenflächen fixiert sind. So befindet sich ein Filter 15 unmittelbar an der Eintrittsfläche 06 im Strahlengang der von der Lichtquelle 05 ausgesandten Strahlung 07. Durch den Filter 15 können bestimmte Frequenzbereiche der Strahlung 07 herausgefiltert werden, um im Wesentlichen die zur Anregung der Probe 10 geeigneten Frequenzbereiche der Strahlung 07 passieren zu lassen. Auf der zur Probe 10 gerichteten Austrittsfläche 11 des Strahlteilers 02 ist eine Linse 17 angeordnet, welche die von der Probe 10 nach deren Anregung emittierte Strahlung 13 bündelt, um diese gerichtet zum Detektor 14 zu leiten. Ein Absorber 18 ist an einer Absorberfläche 19 des Strahlenteilers 02 angeordnet, welche der Eintrittsfläche 06 gegenüberliegend liegt, durch die die von der Lichtquelle 05 ausgesandte Strahlung 07 in den Strahlteiler 02 eintritt. Eintrittsfläche 06 und Absorberfläche 19 liegen parallel zueinander, jedoch auf unterschiedlichen Seiten in Bezug zur dichroitischen Schicht 04. Der Absorber 18 absorbiert die an der dichroitischen Schicht 04 transmittierte Teilstrahlung 12. Die Absorberfläche 19 und die Messfläche 16 spannen einen Winkel von 120° auf, wenn die beiden Prismen 03a, 03b gleichartig geformt sind und der Winkel α zwischen einfallender Strahlung 07 und Flächennormale der dichroitischen Fläche 30° beträgt.

Die erfindungsgemäße Anordnung 01 kann insbesondere zur Fluoreszenzmessung eingesetzt werden, wobei keine Einschränkung auf diesen Anwendungsfall erfolgen soll. Durch die Realisierung eines Einfallswinkels α von etwa 30°, der auf die dichroitische Schicht 04 auftreffenden Strahlung 07, steht erfindungsgemäß ein Strahlteiler 02 mit einer Transmissionskennlinie über der Wellenlänge (Transmission ist eine Funktion der Wellenlänge), die im Übergangsbereich zwischen kleiner und hoher Transmission verhältnismäßig steil ist, zur Verfügung. Verhältnismäßig steil bedeutet, dass der Übergangsbereich von hoher Transmission (z. B. 95 %) zu kleiner Transmission (z. B. 0,2 %) innerhalb von 10 bis 30 nm erfolgen kann. Somit besteht nicht die Gefahr, dass Anteile der zur Anregung dienenden Strahlung 07 das Messergebnis verfälschen. Weiterhin besteht nicht die Gefahr, dass die emittierte Strahlung (13) an der dichroitischen Schicht (04) nicht genügend transmittiert wird.

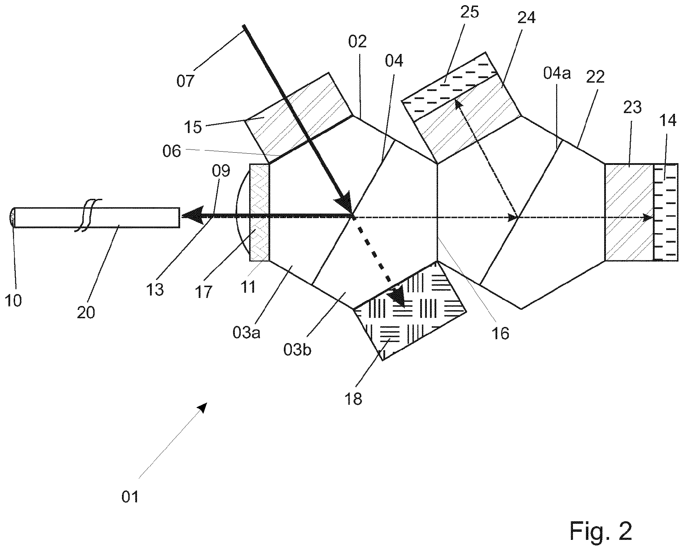

Fig. 2 zeigt eine abgewandelte Ausführungsform der erfindungsgemäßen Anordnung 01. Diese dient der Untersuchung einer Substanz, welche sich für eine fluorometrische Messung von Glucosekonzentrationen eignet.

Dazu umfasst die Anordnung zunächst wieder den ersten Strahlteiler 02, den daran befestigten ersten Filter 15, den Absorber 18 sowie die Linse 17, welche die an der dichroitischen Schicht 04 reflektierte Teilstrahlung 09 in eine lichtleitende optische Faser 20 einkoppelt. Am abgewandten Ende der optischen Faser 20 ist die Probe 10 angeordnet, bei welcher es sich in diesem Fall um eine Substanz handelt, die in Abhängigkeit von der sie umgebenden Glucosekonzentration ihre fluorometrischen Eigenschaften ändert. Diese Substanz ist dafür so konfiguriert, dass die Intensität eines ersten Emissionswellenlängenbereichs von der Glucosekonzentration abhängt und die Intensität eines zweiten Emissionswellenlängenbereichs nicht von der Glucosekonzentration abhängt und als Referenz dient. Das von dieser Substanz emittierte Licht wird als die emittierte Strahlung 13 in den ersten Strahlteiler 02 zurückgekoppelt. Die emittierte Strahlung 13 durchläuft den ersten Strahlteiler 02 in der beschriebenen Weise und wird an der Messfläche 16 nun in einen zweiten Strahlteiler 22 eingekoppelt. Der zweite Strahlteiler 22 bildet damit ein optisches Bauelement, welches unmittelbar an den ersten Strahlteiler 02 anbringbar ist. Die emittierte Strahlung 13 trifft im zweiten Strahlteiler 22 auf eine zweite dichroitische Schicht 04a, wo die beiden Wellenlängenbereiche aufgetrennt werden. Der an der zweiten dichroitischen Schicht 04a transmittierte Teil der emittierten Strahlung 13 gelangt daher über einen zweiten Filter 23 an den ersten Detektor 14, während der reflektierte Teil durch einen dritten Filter 24 zu einem zweiten Detektor 25 gelangt.

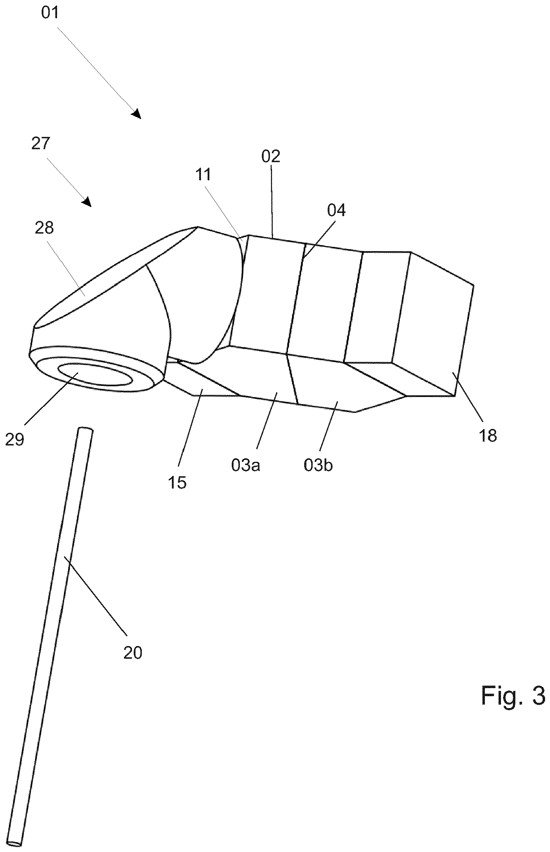

Fig. 3 zeigt einige Elemente einer abgewandelten Ausführungsform der erfindungsgemäßen Anordnung 01, welche zur Untersuchung einer mittels elektromagnetischer Strahlung anregbaren Probe bestimmt ist. Diese Ausführungsform gleicht in ihrem Grundaufbau zunächst den zuvor beschriebenen Ausführungsformen. Die in Fig. 3 dargestellte Ausführungsform besitzt nur einen Strahlteiler 02 auf. Abweichend von den in Fig. 1 und Fig. 2 gezeigten Ausführungsformen ist anstelle der Linse eine Strahlumlenkungseinheit 27 an der Austrittsfläche 11 des ersten Prismas 03a befestigt. Die tubusförmige Strahlumlenkungseinheit 27 ist im der Austrittsfläche 11 gegenüberliegenden Bereich um 90° nach unten in Richtung zu der dort anzuordnenden Probe (nicht gezeigt) abgewinkelt. Der der Austrittsfläche 11 gegenüberliegende Bereich ist abgeflacht ausgebildet, so dass zwischen diesem Bereich und der Austrittsfläche 11 ein Winkel von 45° aufgespannt wird. Der der Austrittsfläche 11 gegenüberliegende Bereich bildet eine erste optische Fläche 28, die eine 90°-Umlenkung der reflektierten Teilstrahlung bzw. der von der Probe emittierten Strahlung bewirkt. An einer zweiten optischen Fläche 29, die sich am freien Ende der tubusförmigen Strahlumlenkungseinheit 27 befindet, tritt die reflektierte Teilstrahlung aus bzw. tritt die emittierte Strahlung 13 in diese Fläche ein. Die zweite optische Fläche 29 weist eine sphärische Fläche auf, womit die Strahlung fokussiert wird. Dies dient insbesondere der Einkopplung der Strahlung in die optische Faser 20. Die Fokussierung wird durch die erste optische Fläche 28 unterstützt, wenn diese eine torische Form aufweist. Die optische Faser 20 verläuft in diesem Fall senkrecht zum Strahlteiler 02, wodurch ein insgesamt flacher Aufbau der Anordnung 01 ermöglicht wird.

### Bezugszeichenliste

- 01 -: Anordnung
- 02 -: erster Strahlteiler
- 03 -: Prismen
- 04 -: dichroitische Schicht
- 05 -: Lichtquelle
- 06 -: Eintrittsfläche
- 07 -: elektromagnetische Strahlung
- 08 -: Flächennormale der dichroitischen Schicht
- 09 -: reflektierte Teilstrahlung
- 10 -: Probe
- 11 -: Austrittsfläche
- 12 -: transmittierte Teilstrahlung
- 13 -: emittierte Strahlung
- 14 -: erster Detektor
- 15 -: Filter
- 16 -: Messfläche
- 17 -: Linse
- 18 -: Absorber
- 19 -: Absorberfläche
- 20 -: optische Faser
- 22 -: zweiter Strahlteiler
- 23 -: zweiter Filter
- 24 -: dritter Filter
- 25 -: zweiter Detektor
- 27 -: Strahlumlenkungseinheit
- 28 -: erste optische Fläche
- 29 -: zweite optische Fläche

- α -: Einfallswinkel
- β -: Winkel zwischen Eintrittsfläche 06 und Schicht 04
- γ -: Winkel zwischen Austrittsfläche 11 und Schicht 04

## Patentansprüche

1. Anordnung (01) zur Untersuchung einer mittels elektromagnetischer Strahlung (07) anregbaren Probe (10) umfassend:
- einen ersten dichroitischen Strahlteiler (02) umfassend ein erstes und ein zweites Prisma (03a, 03b), welche an ihren Basisflächen miteinander verbunden sind, und eine zwischen den Basisflächen der beiden Prismen (03a, 03b) angeordnete dichroitische Schicht (04), wobei eine Eintrittsfläche (06) des ersten Prismas (03a) mit der dichroitischen Schicht (04) einen Winkel (β) einschließt;
- eine Lichtquelle (05) zum Bereitstellen der zur Anregung der Probe (10) geeigneten elektromagnetischen Strahlung (07), wobei die Strahlung (07) in die Eintrittsfläche (06) des ersten Prismas (03a) eingekoppelt wird und wobei ein Teil der Strahlung (07) an der dichroitischen Schicht (04) reflektiert wird in Richtung zur Probe (10), die hinter einer Austrittsfläche (11) des ersten Prismas (03a) positioniert ist;
- einen Detektor (14) zum Erfassen einer von der Probe (10) emittierten, durch den Strahlteiler (02) durchgeleiteten und diesen an einer Messfläche (16) verlassenden elektromagnetischen Strahlung (13),
**dadurch gekennzeichnet,**
**dass** die Eintrittsfläche (06) des ersten Prismas (03a) mit der dichroitischen Schicht (04) einen Winkel (β) im Bereich von 10° bis <40° einschließt.

2. Anordnung (01) nach Anspruch 1, **dadurch gekennzeichnet, dass** die Messfläche (16) des zweiten Prismas (03b) der Austrittsfläche (11) parallel gegenüberliegt.

3. Anordnung (01) nach Anspruch 1 oder 2, **dadurch gekennzeichnet, dass** sie mindestens ein weiteres optisches Bauelement umfasst, welches an einer Außenfläche des Strahlteilers (02) befestigt ist.

4. Anordnung (01) nach Anspruch 3, **dadurch gekennzeichnet, dass** das optische Bauelement vorzugsweise ausgewählt ist aus der Gruppe:
- eine Linse (17),
- ein Filter (15),
- ein Absorber (18),
- eine Strahlumlenkeinheit oder
- ein zweiter dichroitischer Strahlteiler (22), der in seinem Aufbau dem ersten dichroitischen Strahlteiler (02) entspricht.

5. Anordnung (01) nach einem der Ansprüche 1 bis 4, **dadurch gekennzeichnet, dass** an der Austrittsfläche (11) des ersten Prismas (03a) eine Linse (17) befestigt ist, welche die an ihr austretende Strahlung (09) in eine optische Faser (20) einkoppelt, und dass am Ende der optischen Faser (20) die Probe (10) positioniert ist.

6. Anordnung (01) nach Anspruch 4, **dadurch gekennzeichnet, dass** an der Austrittsfläche (11) eine Strahlumlenkeinheit (27) befestigt ist, die mindestens eine erste optische Fläche (28) aufweist, welche die an der Austrittsfläche (11) austretende Strahlung zu einer optischen Faser (20) hin umlenkt.

7. Anordnung (01) nach Anspruch 6, **dadurch gekennzeichnet, dass** die erste optische Fläche (28) eine torische Form aufweist.

8. Anordnung (01) nach Anspruch 6 oder 7, **dadurch gekennzeichnet, dass** die Strahlumlenkeinheit (27) die elektromagnetische Strahlung um 90° umlenkt.

9. Anordnung (01) nach einem der Ansprüche 4 bis 7, **dadurch gekennzeichnet, dass** die Strahlumlenkeinheit (27) aus Glas oder Kunststoff besteht.

10. Anordnung nach einem der Ansprüche 1 bis 9, **dadurch gekennzeichnet, dass** der Strahlteiler (02) eine Grundfläche in Form eines regelmäßigen Sechsecks aufweist.

11. Anordnung nach einem der Ansprüche 1 bis 10, **dadurch gekennzeichnet, dass** die Eintrittsfläche (06) des ersten Prismas (03a) mit der dichroitischen Schicht (04) einen Winkel (β) im Bereich von 25° bis 35° einschließt und die Austrittsfläche (11) des ersten Prismas (03a) mit der dichroitischen Schicht (04) einen Winkel (γ) im Bereich von 25° bis 35° einschließt.

12. Anordnung nach einem der Ansprüche 1 bis 11, **dadurch gekennzeichnet, dass** die dichroitische Schicht (04) aus dielektrischem Material besteht.

13. Anordnung nach einem der Ansprüche 1 bis 12, **dadurch gekennzeichnet, dass** der Strahlteiler zwei gleichartig ausgebildete Prismen (03) umfasst.

## Claims

1. An arrangement (01) for examining a sample (10) which can be excited by means of electromagnetic radiation (07), comprising:
- a first dichroic beam splitter (02) comprising a first and a second prism (03a, 03b) which are connected to one another on the base surfaces thereof, and a dichroic layer (04) arranged between the base surfaces of the two prisms (03a, 03b), wherein an entry surface (06) of the first prism (03a) encloses an angle (β) with the dichroic layer (04);
- a light source (05) for providing the electromagnetic radiation (07) suitable for excitation of the sample (10), wherein the radiation (07) is coupled into the entry surface (06) of the first prism (03a) and wherein a part of the radiation (07) is reflected on the dichroic layer (04) in the direction of the sample (10), which is positioned downstream of an exit surface (11) of the first prism (03a);
- a detector (14) for detecting electromagnetic radiation (13) emitted by the sample (10), passed through the beam splitter (02) and leaving the latter on a measurement surface (16),
**characterized in that** the entry surface (06) of the first prism (03a) encloses an angle (β) in the range from 10° to <40° with the dichroic layer (04).

2. The arrangement (01) according to claim 1, **characterized in that** the measurement surface (16) of the second prism (03b) is arranged in parallel opposite of the exit surface (11).

3. The arrangement (01) according to claim 1 or 2, **characterized in that** it comprises at least one further optical component which is attached to an outer surface of the beam splitter (02).

4. The arrangement (01) according to claim 3, **characterized in that** the optical component is preferably selected from the group consisting of:
- a lens (17),
- a filter (15),
- an absorber (18),
- a beam deflecting unit, or
- a second dichroic beam splitter (22) which corresponds in its construction to the first dichroic beam splitter (02).

5. The arrangement (01) according to one of claims 1 to 4, **characterized in that** a lens (17) is attached to the exit surface (11) of the first prism (03a), which lens couples the radiation (09) emerging from it into an optical fiber (20), and **in that** the sample (10) is positioned at the end of the optical fiber (20).

6. The arrangement (01) according to claim 4, **characterized in that** a beam deflecting unit (27) is attached to the exit surface (11) and which has at least one first optical surface (28) which deflects the radiation exiting at the exit surface (11) to an optical fiber (20).

7. The arrangement (01) according to claim 6, **characterized in that** the first optical surface (28) has a toric shape.

8. The arrangement (01) according to claim 6 or 7, **characterized in that** the beam deflecting unit (27) deflects the electromagnetic radiation by 90°.

9. The arrangement (01) according to one of claims 4 to 7, **characterized in that** the beam deflecting unit (27) consists of glass or plastic.

10. The arrangement according to one of claims 1 to 9, **characterized in that** the beam splitter (02) has a base surface in the form of a regular hexagon.

11. The arrangement according to one of claims 1 to 10, **characterized in that** the entry surface (06) of the first prism (03a) encloses an angle (β) in the range of 25° to 35° with the dichroic layer (04) and the exit surface (11) of the first prism (03a) encloses an angle (γ) in the range of 25° to 35° with the dichroic layer (04).

12. The arrangement according to one of claims 1 to 11, **characterized in that** the dichroic layer (04) consists of dielectric material.

13. The arrangement according to one of claims 1 to 12, **characterized in that** the beam splitter comprises two prisms (03) of the same type.

## Revendications

1. Agencement (01) destiné à l'analyse d'un échantillon (10) stimulable au moyen d'un rayonnement électromagnétique (07) comprenant :
- un premier séparateur de faisceaux dichroïque (02) comprenant un premier et un deuxième prisme (03a, 03b) lesquels sont reliés entre eux sur leurs surfaces de base et une couche dichroïque (04) disposée entre les surfaces de base des deux prismes (03a, 03b), sachant qu'une surface d'entrée (06) du premier prisme (03a) forme avec la couche dichroïque (04) un angle (β),
- une source de lumière (05) pour fournir le rayonnement électromagnétique (07) approprié pour stimuler l'échantillon (10), sachant que le rayonnement (07) est injecté dans la surface d'entrée (06) du premier prisme (03a) et sachant qu'une partie du faisceau (07) est réfléchie sur la couche dichroïque (04) en direction de l'échantillon (10), qui est positionné derrière une surface de sortie (11) du premier prisme (03a),
- un détecteur (14) pour saisir un rayonnement électromagnétique (13) émis par l'échantillon (10), passé à travers le séparateur de faisceaux (02) et quittant celui-ci sur une surface de mesure (16),
**caractérisé en ce que**
la surface d'entrée (06) du premier prisme (03a) forme avec la couche dichroïque (04) un angle (β) se situant dans une plage de 10° à < 40°.

2. Agencement (01) selon la revendication 1, **caractérisé en ce que** la surface de mesure (16) du deuxième prisme (03b) est opposée parallèlement à la surface de sortie (11) .

3. Agencement (01) selon la revendication 1 ou 2, **caractérisé en ce qu'**il comprend au moins un autre composant optique, lequel est fixé à une surface extérieure du séparateur de faisceaux (02).

4. Agencement (01) selon la revendication 3, **caractérisé en ce que** le composant optique est de préférence choisi à partir du groupe :
- une lentille (17),
- un filtre (15),
- un absorbeur (18),
- une unité de déviation de faisceaux ou
- un deuxième séparateur de faisceaux dichroïque (22), qui correspond dans sa structure au premier séparateur de faisceaux dichroïque (02).

5. Agencement (01) selon l'une quelconque des revendications 1 à 4, **caractérisé en ce que** sur la surface de sortie (11) du premier prisme (03a) est fixée une lentille (17), laquelle injecte le faisceau (09) sortant sur celle-ci dans une fibre optique (20) et **en ce que** l'échantillon (10) est positionné à l'extrémité de la fibre optique (20).

6. Agencement (01) selon la revendication 4, **caractérisé en ce qu'**une unité de déviation de faisceau (27) est fixée à la surface de sortie (11), qui comporte au moins une surface optique (28), laquelle dévie le faisceau sortant sur la surface de sortie (11) vers une fibre optique (20).

7. Agencement (01) selon la revendication 6, **caractérisé en ce que** la première surface optique (28) comporte une forme torique.

8. Agencement (01) selon la revendication 6 ou 7, **caractérisé en ce que** l'unité de déviation de faisceau (27) dévie le rayonnement électromagnétique de 90°.

9. Agencement (01) selon l'une quelconque des revendications 4 à 7, **caractérisé en ce que** l'unité de déviation de faisceau (27) est composée de verre ou de matière plastique.

10. Agencement selon l'une quelconque des revendications 1 à 9, **caractérisé en ce que** le séparateur de faisceaux (02) comporte une surface de base sous la forme d'un hexagone régulier.

11. Agencement selon l'une quelconque des revendications 1 à 10, **caractérisé en ce que** la surface d'entrée (06) du premier prisme (03a) forme avec la couche dichroïque (04) un angle (β) se situant dans une plage de 25° à 35° et la surface de sortie (11) du premier prisme (03a) avec la couche dichroïque (04) un angle (y) se situant dans une plage de 25° à 35°.

12. Agencement selon l'une quelconque des revendications 1 à 11, **caractérisé en ce que** la couche dichroïque (04) est composée d'un matériau diélectrique.

13. Agencement selon l'une quelconque des revendications 1 à 12, **caractérisé en ce que** le séparateur de faisceaux comprend deux prismes (03) constitués de façon analogue.
